# FASCICULE DE BREVET EUROPEEN

(11) **EP 1 870 978 B1**
(45) Date de publication et mention de la délivrance du brevet: **25.04.2012**
(21) Numéro de dépôt: 06291035.1
(22) Date de dépôt: 23.06.2006
(51) Int. Cl.: H02J 1/14, H02J 1/08

(54) **Boîtier de distribution d'énergie**
Elektrisches Netzverteilungsgehäuse
Electrical distribution box

(43) Date de publication de la demande: 26.12.2007
(73) Titulaire: BWI Company Limited S.A., 1628 Luxembourg (LU)
(72) Inventeur: Degoul, Paul, 75014 Paris (FR); Larroux, Jean-Francois, 92400 Courbevoie (FR)
(74) Mandataire: Laget, Jean-Loup

(56) Documents cités:
- WO-A-01/62569
- WO-A-03/023936
- DE-A1- 10 020 141
- FR-A1- 2 850 071
- US-A1- 2005 269 619

## Description

La présente invention a pour objet un boîtier de distribution d'énergie pour un système à commande électrique d'un véhicule et une architecture d'alimentation en énergie utilisant le boîtier de distribution d'énergie.

L'industrie automobile a actuellement tendance à utiliser de plus en plus de systèmes à commande électrique. Un système à commande électrique comporte des actionneurs électromécaniques qui remplacent les actionneurs mécaniques classiques.

La fiabilité des composants électroniques étant plus faible que celle des composants mécaniques, une attention particulière doit être portée à la gestion des défaillances dans les systèmes à commande électrique, en particulier pour les systèmes à commande électrique relatifs à la sécurité du véhicule, par exemple les systèmes de freinage, de direction et de suspension. L'objectif est de réaliser des systèmes à commande électrique tolérants aux défaillances, c'est-à-dire des systèmes dont le fonctionnement est assuré même en cas de défaillance d'une partie du système.

Les systèmes à commande électrique sont alimentés par un boîtier de distribution d'énergie. En cas de défaillance au niveau du système à commande électrique (source d'énergie, faisceau, boîtier de distribution, charges électriques), il est important que le boîtier de distribution d'énergie continue de fournir suffisamment d'énergie pour que le système à commande électrique puisse assurer sa ou ses fonction(s). L'architecture d'alimentation électrique doit donc être tolérante aux défaillances.

Le document FR 2 850 071 décrit un boîtier de distribution d'énergie pour un système de freinage électromécanique d'un véhicule automobile. Le boîtier de distribution d'énergie comporte un ensemble d'entrées, destinées à être respectivement raccordées à des sources d'alimentation du boîtier en énergie électrique, et un ensemble de sorties, destinées à être raccordées à des charges électriques du système de freinage. Des moyens de diagnostic réalisent des mesures de courant pour contrôler le bon fonctionnement des sources d'alimentation et des charges électriques. Des moyens de commutation sont interposés entre les entrées et les sorties pour permettre de configurer les éléments du circuit d'alimentation des sorties en fonction de dysfonctionnements détectés dans un réseau d'alimentation s'étendant entre les moyens d'alimentation et les charges électriques.

Le boîtier de distribution d'énergie décrit dans ce document présente l'inconvénient qu'il est complexe à mettre en oeuvre, notamment lorsque le nombre d'entrées et/ou de sorties est important.

WO 03/023936 décrit un boîtier de distribution d'énergie pour un système à commande électrique d'un véhicule, ledit boîtier comportant des commutateurs disposés entre des entrées du boîtier qui sont connectées à des sources d'alimentation et des sorties du boîtier qui sont connectées à des charges électriques.

La présente invention a pour but de proposer un boîtier de distribution d'énergie pour un système à commande électrique d'un véhicule qui évite au moins certains des inconvénients précités et qui soit tolérant aux défaillances.

A cet effet, l'invention a pour objet un boîtier de distribution d'énergie pour un système à commande électrique d'un véhicule, boîtier de distribution d'énergie comportant :
- un ensemble d'entrées destinées à être connectées à des sources d'alimentation en énergie électrique,
- un ensemble de sorties destinées à être connectées à des charges électriques dudit système et
- des moyens de commutation disposés entre ledit ensemble d'entrées et ledit ensemble de sorties,
ledit boîtier de distribution d'énergie étant apte à communiquer avec un module de commande des moyens de commutation, ledit module de commande comportant des moyens de mesure pour effectuer des mesures d'au moins un paramètre électrique au niveau de chaque entrée dudit ensemble d'entrées et de chaque sortie dudit ensemble de sorties, ledit module de commande comportant des moyens de décision aptes à détecter, en fonction desdites mesures effectuées, une défaillance au niveau d'une entrée dudit ensemble d'entrées ou d'une sortie dudit ensemble de sorties, lesdits moyens de décision étant aptes, lorsqu'une dite défaillance a été détectée, à commander lesdits moyens de commutation dans un mode dégradé permettant d'isoler l'entrée ou la sortie comportant ladite défaillance,
caractérisé par la partie caractérisante de la revendication 1.

Avantageusement, ledit ensemble d'entrées comporte une première entrée et une deuxième entrée, une première ligne d'alimentation d'entrée s'étendant entre ladite première entrée et ledit élément de connexion, une deuxième ligne d'alimentation d'entrée s'étendant entre ladite deuxième entrée et ledit élément de connexion, un moyen de commutation assurant le couplage sélectif de ladite première ligne d'alimentation d'entrée et de ladite deuxième ligne d'alimentation d'entrée.

Selon un mode de réalisation de l'invention, au moins l'un desdits moyens de commutation est réalisé à l'aide d'un transistor.

Selon un mode de réalisation de l'invention, ledit transistor est un transistor à pompe de charge intégrée ou un transistor à pompe de charge externe et redondée.

Selon un mode de réalisation de l'invention, ledit transistor est apte à être utilisé sur sa diode intrinsèque en cas de défaillance de la pompe de charge alimentant ledit transistor.

Selon un mode de réalisation de l'invention, au moins l'un desdits moyens de commutation est réalisé à l'aide d'un relais.

Selon un mode de réalisation de l'invention, ledit module de commande est silencieux en cas de défaillance, lesdits moyens de commutation étant configurés par défaut de façon à alimenter chaque sortie dudit ensemble de sorties par au moins une entrée dudit ensemble d'entrées.

L'invention a également pour objet une architecture de distribution d'énergie comportant un boîtier de distribution d'énergie,
caractérisé en ce que ledit boîtier de distribution d'énergie alimente en énergie un système de freinage électromécanique dudit véhicule, une première entrée dudit ensemble d'entrées étant connectée à une source principale d'alimentation en énergie électrique, et une deuxième entrée dudit ensemble d'entrées étant connectée à une source secondaire d'alimentation en énergie électrique.

Avantageusement, ledit système de freinage électromécanique comporte trois émulateurs de toucher de pédale connectés audit boîtier de distribution d'énergie de manière que, en cas de défaillance, au moins deux desdits émulateurs de toucher de pédale soient aptes à être alimentés par ledit boîtier de distribution d'énergie.

Avantageusement, ledit système de freinage électromécanique comporte deux émulateurs de toucher de pédale connectés audit boîtier de distribution d'énergie de manière que, en cas de défaillance, au moins l'un desdits émulateurs de toucher de pédale soit apte à être alimenté par ledit boîtier de distribution d'énergie.

Selon un mode de réalisation de l'invention, ledit ensemble de sorties comporte une première sortie connectée à un premier frein électrique dudit système de freinage électromécanique et à un premier émulateur de toucher de pédale dudit système de freinage électromécanique, ledit ensemble de sorties comportant une deuxième sortie connectée à un deuxième frein électrique dudit système de freinage électromécanique et à un deuxième émulateur de toucher de pédale dudit système de freinage électromécanique, ledit ensemble de sorties comportant une troisième sortie connectée à un troisième frein électrique dudit système de freinage électromécanique et à un troisième émulateur de toucher de pédale dudit système de freinage électromécanique, ledit ensemble de sorties comportant une quatrième sortie connectée à un quatrième frein électrique dudit système de freinage électromécanique.

Selon un mode de réalisation de l'invention, ledit ensemble de sorties comporte une première sortie connectée à un premier frein électrique dudit système de freinage électromécanique, à un deuxième frein électrique dudit système de freinage électromécanique, ledit deuxième frein électrique étant disposé en diagonale par rapport audit premier frein électrique, et à un premier émulateur de toucher de pédale dudit système de freinage électromécanique, ledit ensemble de sorties comportant une deuxième sortie connectée à un troisième frein électrique dudit système de freinage électromécanique, à un quatrième frein électrique dudit système de freinage électromécanique, ledit quatrième frein électrique étant disposé en diagonale par rapport audit troisième frein électrique, et à un deuxième émulateur de toucher de pédale dudit système de freinage électromécanique, ledit ensemble de sorties comportant une troisième sortie connectée à un troisième émulateur de toucher de pédale dudit système de freinage électromécanique.

Selon un mode de réalisation de l'invention, ledit ensemble de sorties comporte une première sortie connectée à un premier frein électrique dudit système de freinage électromécanique, à un deuxième frein électrique dudit système de freinage électromécanique, ledit deuxième frein électrique étant disposé en diagonale par rapport audit premier frein électrique, et à un premier émulateur de toucher de pédale dudit système de freinage électromécanique, ledit ensemble de sorties comportant une deuxième sortie connectée audit premier frein électrique, audit deuxième frein électrique et à un deuxième émulateur de toucher de pédale dudit système de freinage électromécanique, ledit ensemble de sorties comportant une troisième sortie connectée à un troisième frein électrique dudit système de freinage électromécanique, à un quatrième frein électrique dudit système de freinage électromécanique, ledit quatrième frein électrique étant disposé en diagonale par rapport audit troisième frein électrique, et à un troisième émulateur de toucher de pédale dudit système de freinage électromécanique, ledit ensemble de sorties comportant une quatrième sortie connectée audit troisième frein électrique et audit quatrième frein électrique.

Selon un mode de réalisation de l'invention, ledit ensemble de sorties comporte une première sortie connectée à quatre freins électriques dudit système de freinage électromécanique et à un premier émulateur de toucher de pédale dudit système de freinage électromécanique, ledit ensemble de sorties comportant une deuxième sortie connectée auxdits quatre freins électriques et à un deuxième émulateur de toucher de pédale dudit système de freinage électromécanique, ledit ensemble de sorties comportant une troisième sortie connectée à un troisième émulateur de toucher de pédale dudit système de freinage électromécanique.

Selon un mode de réalisation de l'invention, ledit ensemble de sorties comporte une première sortie connectée à un premier frein électrique avant dudit système de freinage électromécanique et à un premier émulateur de toucher de pédale dudit système de freinage électromécanique, ledit ensemble de sorties comportant une deuxième sortie connectée à un deuxième frein électrique avant dudit système de freinage électromécanique et à un deuxième émulateur de toucher de pédale dudit système de freinage électromécanique, ledit ensemble de sorties comportant une troisième sortie connectée à deux freins électriques arrière dudit système de freinage électromécanique et à un troisième émulateur de toucher de pédale dudit système de freinage électromécanique.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.
Sur ces dessins :
- la figure 1 est une vue schématique simplifiée d'un boîtier de distribution d'énergie selon un premier mode de réalisation de l'invention, le boîtier de distribution d'énergie étant configuré en mode normal ;
- la figure 2 est une vue similaire à la figure 1 montrant le boîtier de distribution d'énergie configuré dans un mode dégradé suite à la détection d'un circuit ouvert au niveau de la connexion entre le boîtier de distribution d'énergie et une batterie principale ;
- la figure 3 est une vue similaire à la figure 1 montrant le boîtier de distribution d'énergie configuré dans un mode dégradé suite à la détection d'un court circuit au niveau d'une charge électrique connectée au boîtier de distribution d'énergie ;
- la figure 4 est un schéma électrique simplifié schématisant différentes défaillances qui peuvent se produire dans une ligne d'alimentation de sortie reliant une sortie du boîtier de distribution d'énergie et deux charges électriques ;
- la figure 5 est une vue schématique simplifiée montrant un premier exemple d'architecture de distribution d'énergie dans laquelle le boîtier de distribution d'énergie de la figure 1 alimente en énergie un système de freinage électromécanique ;
- la figure 6 est une vue similaire à la figure 5 montrant un deuxième exemple d'architecture de distribution d'énergie ;
- la figure 7 est une vue similaire à la figure 5 montrant un troisième exemple d'architecture de distribution d'énergie;
- la figure 8 est une vue similaire à la figure 5 montrant un quatrième exemple d'architecture de distribution d'énergie ;
- la figure 9 est une vue similaire à la figure 5 montrant un cinquième exemple d'architecture de distribution d'énergie ;
- la figure 10 est une vue similaire à la figure 5 montrant un sixième exemple d'architecture de distribution d'énergie ;
- la figure 11 est un schéma électrique simplifié schématisant un transistor de type MOSFET et sa diode intrinsèque ; et
- la figure 12 est une vue schématique simplifiée d'une variante de réalisation du boîtier de distribution d'énergie utilisant des transistors de type MOSFET.

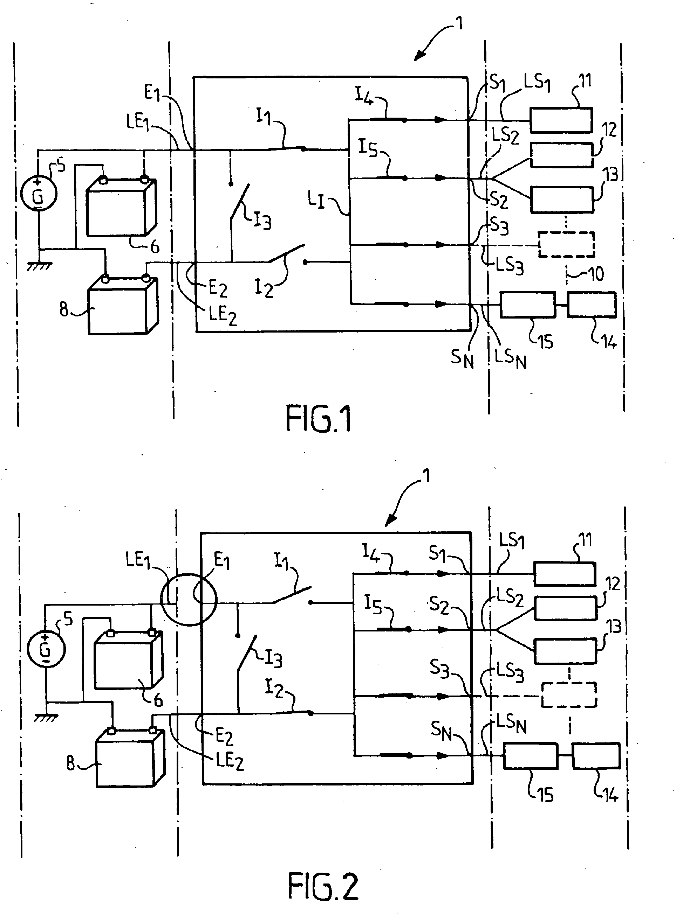

En se référant à la figure 1, un boîtier de distribution d'énergie 1, disposé dans un véhicule (non représenté), comporte une première entrée E₁ et une deuxième entrée E₂. La première entrée E₁ est connectée, via une première ligne d'alimentation d'entrée L_{E1}, à une première source d'alimentation en énergie électrique. La première source d'alimentation est par exemple le réseau d'alimentation en énergie usuel du véhicule comportant un générateur 14V 5 et une batterie principale 12V 6.

La deuxième entrée E₂ est connectée, via une deuxième ligne d'alimentation d'entrée L_{E2}, à une deuxième source d'alimentation en énergie électrique. La deuxième source d'alimentation est par exemple une batterie secondaire 12V 8. La batterie secondaire 8 est une batterie de secours qui fournit de l'énergie au boîtier de distribution d'énergie 1 uniquement en cas de dysfonctionnement du réseau d'alimentation usuel.

En variante, la deuxième source d'alimentation peut être un ensemble de super condensateurs (non représentés), ce qui permet notamment d'augmenter le temps de vie de la deuxième source d'alimentation et d'améliorer la gestion de sa charge.

Dans le cas de l'usage de super condensateurs, un circuit de limitation de courant est utilisé pour éviter des courants de valeurs trop élevées durant la charge des super condensateurs. Le circuit de limitation de courant peut par exemple comporter un convertisseur à découpage DC-DC, une résistance variable ou fixe ou une source de courant.

De manière plus générale, le boîtier 1 présente un ensemble d'entrées comprenant un nombre non limitatif d'entrées.

Le boîtier 1 comporte N sorties S₁ à S_{N}, N étant un nombre entier supérieur ou égal à 1. Sur la figure 1, par souci de clarté, seules quatre sorties S₁, S₂, S₃ et S_{N} ont été représentées, la présence d'un nombre plus important de sorties étant symbolisé par des traits interrompus 10.

La première sortie S₁ est connectée, via une première ligne d'alimentation de sortie L_{S1}, à une charge électrique 11 d'un système à commande électrique. La charge 11 est destinée à être alimentée à une tension identique à celle fournie par les batteries 6, 8.

La deuxième sortie S₂ est connectée, via une deuxième ligne d'alimentation de sortie L_{S2}, à deux charges électriques 12 et 13 du système à commande électriques. Chacune des deux charges 12, 13 est destinée à être alimentée à une tension identique à celle fournie par les batteries 6, 8.

La N^{ième} sortie S_{N} est connectée, via une N^{ième} ligne d'alimentation de sortie L_{SN}, à une charge électrique 14 du système à commande électrique. La charge 14 est destinée à être alimentée à une tension différente de celle fournie par les batteries 6, 8. Un convertisseur DC-DC 15 est donc disposé sur la ligne d'alimentation de sortie L_{SN} pour adapter la tension de la charge 14 à la tension fournie par les batteries 6, 8.

De manière générale, le boîtier 1 présente un ensemble de sorties comprenant un nombre de sorties, non limitatif, qui dépend du nombre de sorties indépendantes nécessaires pour l'application cible. Une ligne d'alimentation de sortie L_{S} peut alimenter un ou plusieurs composants. Plusieurs convertisseurs DC-DC peuvent être utilisés sur plusieurs lignes d'alimentation de sortie L_{S} pour obtenir des sorties S de différentes tensions.

Comme pour les sorties S, un convertisseur DC/DC peut être utilisé pour permettre l'utilisation de sources d'alimentation en énergie électrique de tensions différentes sur les entrées E.

Chacune des première et deuxième ligne d'alimentation d'entrée L_{E1} et L_{E2} est connectée, à l'intérieur du boîtier 1, à une ligne de connexion L₁. La ligne de connexion L₁ est connectée à chacune des lignes d'alimentation de sorties L_{S}.

Un premier interrupteur I₁ est disposé sur la première ligne d'alimentation d'entrée L_{E1}. Le premier interrupteur I₁ permet le couplage sélectif de la première entrée E₁ et de la ligne de connexion L₁, c'est-à-dire le couplage sélectif de la première entrée E₁ et de l'ensemble des sorties S.

Un deuxième interrupteur I₂ est disposé sur la deuxième ligne d'alimentation d'entrée L_{E2}. Le deuxième interrupteur I₂ permet le couplage sélectif de la deuxième entrée E₂ et de la ligne de connexion L₁, c'est-à-dire le couplage sélectif de la première entrée E₂ et de l'ensemble des sorties S.

Un troisième interrupteur I₃ est disposé entre la première ligne d'alimentation d'entrée L_{E1} et la deuxième ligne d'alimentation d'entrée L_{E2}. Le troisième interrupteur I₃ permet un couplage sélectif de la première ligne d'alimentation d'entrée L_{E1} et de la deuxième ligne d'alimentation d'entrée L_{E2}.

Un quatrième interrupteur I₄ est disposé sur la première ligne d'alimentation de sortie L_{S1}. Le quatrième interrupteur I₄ permet le couplage sélectif de la ligne de connexion L₁ et de la première sortie S₁, c'est-à-dire le couplage sélectif de l'ensemble des entrées E et de la première sortie S₁.

Un cinquième interrupteur I₅ est disposé sur la deuxième ligne d'alimentation de sortie L_{S2}. Le cinquième interrupteur I₅ permet le couplage sélectif de la ligne de connexion L₁ et de la deuxième sortie S₂, c'est-à-dire le couplage sélectif de l'ensemble des entrées E et de la première sortie S₂.

De manière similaire, un interrupteur I est disposé sur chaque ligne d'alimentation de sortie L_{S}. On notera que, N étant le nombre de lignes d'alimentation de sortie, le boîtier 1, dans ce mode de réalisation, comporte N+3 interrupteurs.

Les lignes d'alimentation d'entrée L_{E} et les lignes d'alimentation de sortie L_{S} peuvent chacune être déconnectée de la ligne de connexion L₁ par ouverture de l'interrupteur I correspondant.

Les lignes d'alimentation de sorties L_{S} sont ainsi indépendantes les unes des autres. Chaque ligne d'alimentation de sortie L_{S} peut être déconnectée en ouvrant l'interrupteur I correspondant, cela n'empêchant pas l'alimentation des autres lignes d'alimentation de sortie L_{S} par les lignes d'alimentation d'entrée L_{E}.

Cette disposition permet de réaliser très simplement un boîtier 1 comportant un grand nombre d'entrées E et de sorties S.

Les interrupteurs I sont par exemple réalisés par des transistors de type MOSFET, alimentés par une pompe de charge.

Deux pompes de charge redondantes peuvent être utilisées pour permettre le fonctionnement des transistors en cas de défaillance d'une pompe de charge.

En variante, les transistors comportent une pompe de charge intégrée.

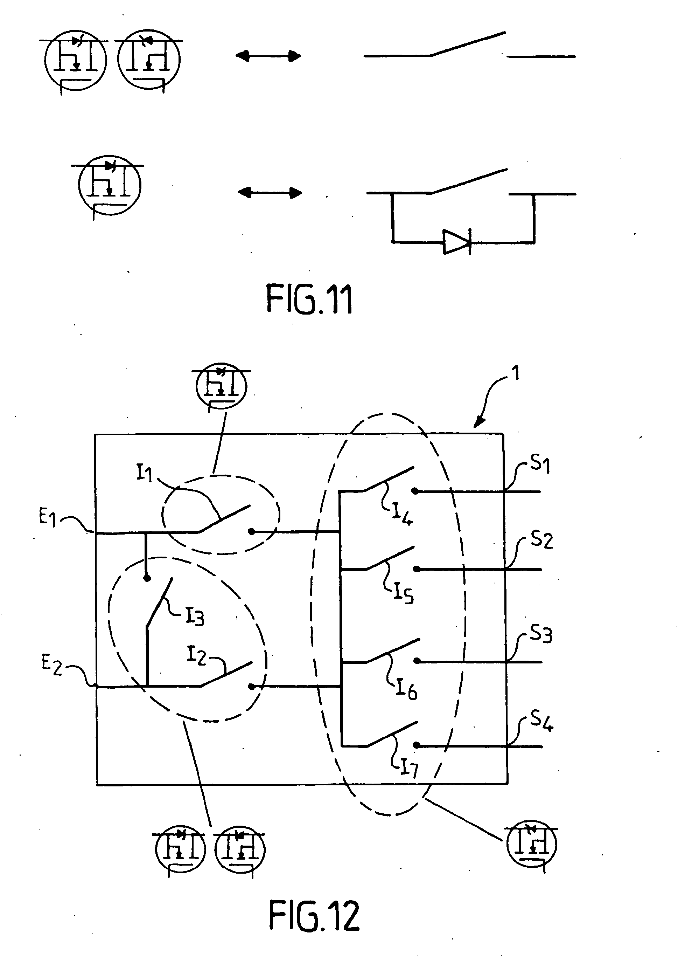

En variante, les transistors sont configurés pour pouvoir laisser passer le courant grâce à leur diode intrinsèque en cas de défaut de leur pompe de charge. La figure 11 présente l'équivalent électrique d'un transistor de type MOSFET en cas de défaut d'alimentation de la pompe de charge.

La figure 12 présente une variante de réalisation du boîtier de distribution d'énergie. Dans cette variante, les interrupteurs I₁, I₂ et I₃ sont réalisés par des transistors de type MOSFET alimentés par la même pompe de charge. Les interrupteurs I₄, I₅, I₆ et I₇ sont réalisés par des transistors de type MOSFET possédant leur propre pompe de charge. En cas de défaillance da la pompe de charge alimentant les interrupteurs I₁, I₂ et I₃ le courant peut circuler grâce à la diode intrinsèque du transistor de l'interrupteur I₁.

D'autres variantes sont possibles. Par exemple, les interrupteurs I peuvent être réalisés par d'autres dispositifs de commutation à base de semi-conducteur (transistor de type IGBT, thyristor, diode), ou par des relais.

L'ouverture et la fermeture des interrupteurs I est commandée par un module de commande (non représenté). Le module de commande comporte, ou est connecté à, des moyens de mesures (non représentés) aptes à effectuer des mesures de courant et de tension au niveau de chaque entrée E et de chaque sortie S et au niveau des composants internes du boîtier 1. Des capteurs externes additionnels (non représentés), par exemple des capteurs de température, peuvent également être connectés au module de commande, via des entrées analogiques ou des bus de communication.

Le module de commande comporte des moyens de décision (non représentés). Les moyens de décision sont réalisés par exemple à partir de microcontrôleurs ou de circuits intégrés programmables de type FPGA (Field Programmable Gate Array) ou ASIC (Application Specific Integrated Circuit).

Les moyens de décision ont une structure redondante pour être tolérants aux défaillances. La redondance sur le module de commande est d'ordre 2. En cas de défaillance du module de commande, ce dernier est silencieux, le silence du module de commande étant un état sûr. En cas de défaillance du module de commande, l'alimentation des sorties S est garantie grâce à la configuration par défaut des interrupteurs I, tel que cela sera décrit en détails plus loin. Par exemple, les moyens de décision peuvent être réalisés à partir d'un système à microcontrôleur asymétrique comportant un microcontrôleur principal et un contrôleur de surveillance bon marché. En variante, les moyens de décision peuvent être réalisés à partir d'un système à microcontrôleur symétrique comportant deux microcontrôleurs principaux. En variante, les moyens de décision peuvent être réalisés à partir d'un microcontrôleur unique comportant une architecture à double coeur. En variante, les moyens de décision peuvent être réalisés à partir d'un microcontrôleur supervisé par un circuit ASIC ou FPGA. En variante, les moyens de décision peuvent être réalisés à partir de deux circuits ASIC ou FPGA. En variante, les moyens de décisions peuvent être réalisés à partir d'un microcontrôleur unique, comportant en interne un coeur principal et un coprocesseur, couplé avec un système matériel externe très fiable contrôlant son fonctionnement également appelé « chien de garde ».

Pour des raisons de sécurité, tous les interrupteurs I sont fermés par défaut, c'est-à-dire en l'absence de commande du module de commande, sauf les interrupteurs I₂ et I₃. Ceci permet par défaut d'avoir les sorties S alimentées par la source 6. En particulier en absence de commande du module de commande lors d'une défaillance de ce module, les sorties S sont alimentées par 6. Cette configuration permet d'utiliser un module de commande silencieux sur défaillance (redondance d'ordre 2), et de s'affranchir d'une redondance triple au niveau de ce module.

Des algorithmes de commande sont mémorisés dans le module de commande pour permettre la gestion de l'énergie.

Le module de commande peut être interne au boîtier de distribution d'énergie 1 ou réalisé sous la forme d'un module externe connecté au boîtier 1, par exemple par le biais d'un bus de communication.

Le boîtier de distribution d'énergie 1 est disposé dans le véhicule de manière à éviter des risques de dommages causés, par exemple, par un choc. Le boîtier 1 est par exemple disposé à l'intérieur de la cabine de conduite ou dans le coffre.

On va maintenant décrire le fonctionnement du boîtier de distribution d'énergie 1.

La fonction principale du boîtier 1 est d'alimenter les charges électriques 11, 12, 13, 14 à partir d'énergie provenant des sources d'alimentation 6, 8.

Pour cela, les algorithmes de commande comprennent un algorithme de gestion des défaillances. L'algorithme de gestion des défaillances permet, à partir des mesures fournies par les moyens de mesures, de déterminer la présence d'une défaillance en un point du réseau d'alimentation. Le réseau d'alimentation est défini par l'ensemble des lignes d'alimentation L_{E}, L_{S} s'étendant entre les batteries 6, 8 et les charges 11, 12, 13, 14.

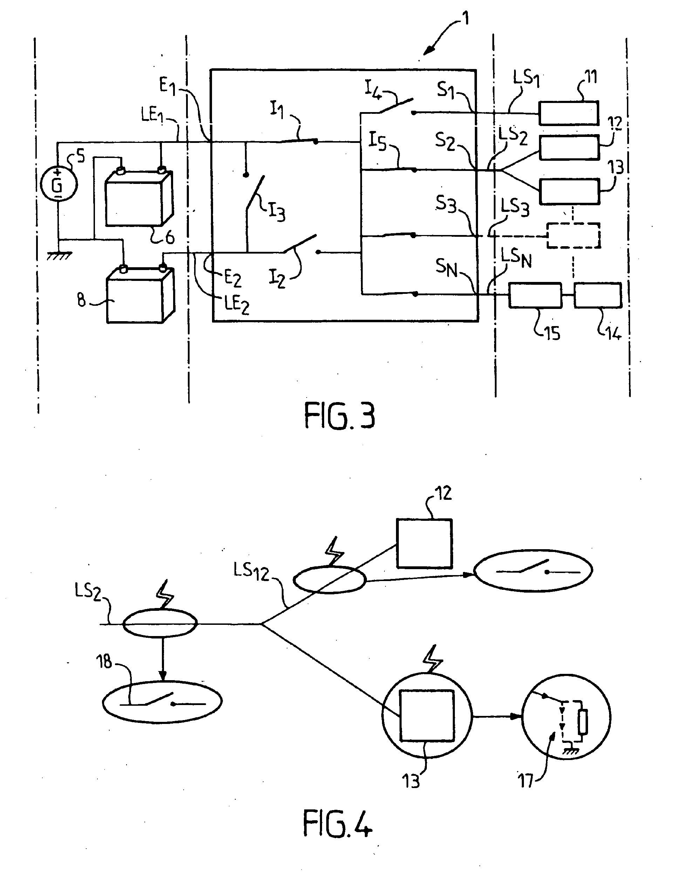

La figure 4 montre des exemples de défaillances pouvant se produire au niveau de la deuxième ligne d'alimentation de sortie L_{S2}. Un court circuit au niveau de la charge 13 est équivalent à une connexion de la ligne d'alimentation à la masse, tel que cela est schématisé par le circuit électrique 17.

Un circuit ouvert sur la ligne d'alimentation L_{S2} est équivalent à la présence d'un interrupteur ouvert 18 sur la ligne d'alimentation L_{S2}. Dans ce cas, les charges 12 et 13 sont déconnectées. Lorsque le circuit ouvert se trouve au niveau d'un sous-système, c'est-à-dire par exemple sur la sous-ligne d'alimentation L_{S12} connectant la ligne d'alimentation L_{S2} et la charge 12, seule la charge 12 est déconnectée.

De manière plus générale, une défaillance peut être due à un circuit ouvert ou à un court circuit, sur une entrée E ou sur une sortie S. Une défaillance peut également être due a une sous-tension, à une surtension, à un sur-courant ou à un sous-courant, sur une entrée E ou une sortie S. Une défaillance peut également être due à un dysfonctionnement d'un composant interne du boîtier 1.

Lorsque le module de commande détecte une défaillance, par exemple en comparant les mesures fournies par les moyens de mesure avec des valeurs prédéfinies correspondant à un fonctionnement normal, le module de commande commande l'isolation de la défaillance et détermine un schéma de gestion de la défaillance, ou mode dégradé, permettant d'optimiser la disponibilité des lignes d'alimentation de sortie Lₛ.

Par exemple, en cas de circuit ouvert sur la première ligne d'alimentation d'entrée L_{E1} (figure 2), le module de commande commande l'ouverture du premier interrupteur I₁, pour isoler la défaillance. On notera que le troisième interrupteur I₃ est déjà ouvert dans le mode normal représenté sur la figure 1. Dans le cas contraire, le module de commande commande également l'ouverture de l'interrupteur I₃. Le module de commande commande la fermeture du deuxième interrupteur I₂, pour permettre l'alimentation des charges 11, 12, 13 et 14 à partir de la batterie secondaire 8. Dans ce mode dégradé, toutes les lignes d'alimentation de sortie L_{S} sont disponibles.

La figure 3 montre le cas d'un court circuit détecté au niveau de la sortie S₁. Dans ce cas, le module de commande commande l'ouverture du quatrième interrupteur I₄ pour isoler la défaillance. L'état des autres interrupteurs I n'est pas modifié par rapport au mode normal. Dans ce mode dégradé, seule une ligne d'alimentation de sortie, c'est-à-dire la ligne L_{S1}, n'est pas disponible. Les autres lignes d'alimentation de sortie L_{S} fonctionnent normalement.

Ainsi, en cas de défaillance, toutes les lignes d'alimentation de sortie L_{S} sont disponibles, ou, dans le pire des cas, N-1 lignes d'alimentation de sortie L_{S} sont disponibles.

Lorsque la fin d'une défaillance a été détectée, par exemple, dans le cas représenté sur la figure 2, lorsque le circuit n'est plus ouvert au niveau de la première entrée E₁, le module de commande commande le retour au mode normal. Dans l'exemple, le module de commande commande la fermeture du premier interrupteur I₁ et l'ouverture du deuxième interrupteur I₂. Cela permet de ne conserver le mode dégradé que tant que celui-ci est nécessaire.

Le module de commande a également pour fonction de contrôler les batteries 6, 8, d'une manière connue en soi, pour garantir la disponibilité d'une réserve spécifique d'énergie pour les composants critiques.

Le module de commande a également pour fonction de gérer la recharge des batteries 6, 8. Pour cela, les algorithmes de commande comprennent un algorithme de gestion des sources d'énergie. Cet algorithme permet de sélectionner la source la plus fiable pour l'alimentation. Lorsque la source d'énergie la plus fiable a été sélectionnée, le module de commande connecte l'ensemble de sorties S à cette source, en utilisant de manière sélective les premier et deuxième interrupteurs I₁ et I₂.

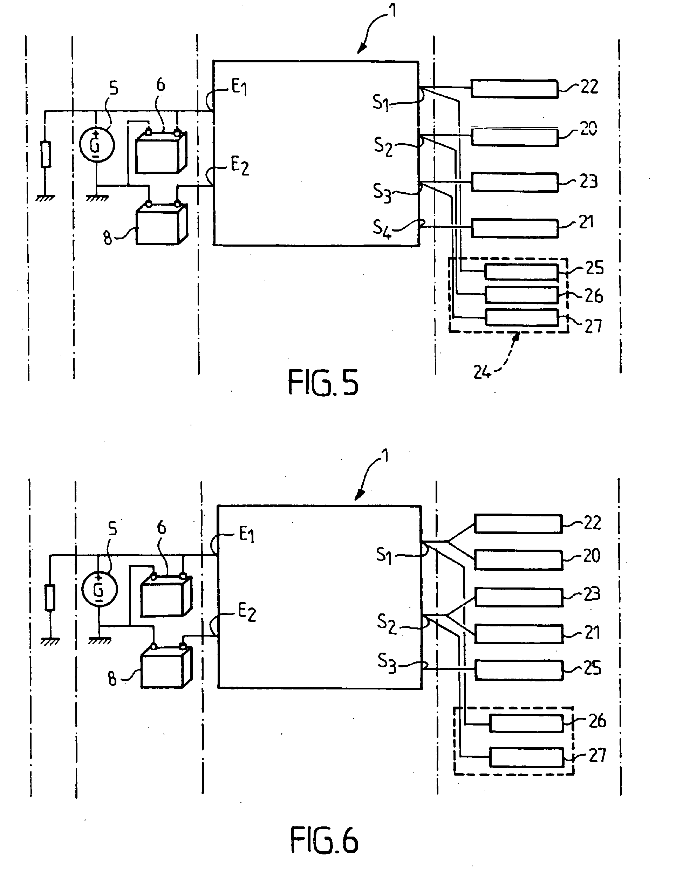

En se référant aux figures 5 à 10, on va maintenant décrire plusieurs exemples d'architectures de distribution d'énergie dans lesquelles le boîtier 1, qui est tel que décrit précédemment, alimente un système de freinage électromécanique.

Le système de freinage comporte un frein électrique arrière droit 20 associé à la roue arrière droite du véhicule, un frein électrique arrière gauche 21 associé à la roue arrière gauche du véhicule, un frein électrique avant gauche 22 associé à la roue avant gauche du véhicule et un frein électrique avant droit 23 associé à la roue avant droite du véhicule. Chaque frein électrique 20 à 23 comporte, de manière connue en soi, un étrier de frein. Les étriers de frein sont par exemple des étriers fonctionnant à une tension de 12V. Dans ce cas, la tension des étriers est adaptée à la tension des batteries 6, 8 et il n'est pas nécessaire d'utiliser des convertisseurs DC-DC. Le système de freinage comporte un ensemble de capteurs 24 permettant de déterminer une commande provenant du conducteur du véhicule. L'ensemble de capteurs comporte par exemple trois émulateurs de toucher de pédale 25, 26 et 27 associés à la pédale de frein du véhicule. Une variante à seulement deux émulateurs de toucher de pédale 25 et 26 est également possible.

La figure 5 montre un premier exemple d'architecture. Par souci de clarté, l'intérieur du boîtier 1 n'a pas été représenté.

Dans cet exemple, le boîtier 1 comporte quatre sorties S₁, S₂, S₃ et S₄, c'est-à-dire que N=4. La sortie S₁ est connectée au frein avant gauche 22 et à l'émulateur de pédale 25. La sortie S₂ est connectée au frein arrière droit 20 et à l'émulateur de pédale 26. La sortie S₃ est connectée au frein avant droit 23 et à l'émulateur de pédale 27. La sortie S₄ est connectée au frein arrière gauche 21.

Dans cet exemple, les freins 20 à 22 sont connectés de manière indépendante les uns des autres. Les émulateurs 25, 26 et 27 utilisent les mêmes sorties S que les freins 22, 20 et 23, respectivement. On notera que des sorties supplémentaires pourraient être prévues pour séparer les émulateurs de la pédale de frein.

La figure 6 montre un deuxième exemple d'architecture. Dans cet exemple, le boîtier 1 comporte trois sorties S₁, S₂ et S₃, c'est-à-dire que N=3.

La sortie S₁ est connectée au frein avant gauche 22, au frein arrière droit 20 et à l'émulateur 26. La sortie S₂ est connectée au frein avant droit 23, au frein arrière gauche 21 et à l'émulateur 27. La sortie S₃ est connectée à l'émulateur 25. On notera que les freins 20 à 23 sont associés par paire en diagonale, c'est-à-dire que le frein avant gauche 22 est associé avec le frein arrière droit 20 et que le frein arrière gauche 21 est associé avec le frein avant droit 21. Cela permet, en cas de dysfonctionnement sur une sortie, de freiner sur une diagonale, ce qui permet d'assurer la stabilité du véhicule.

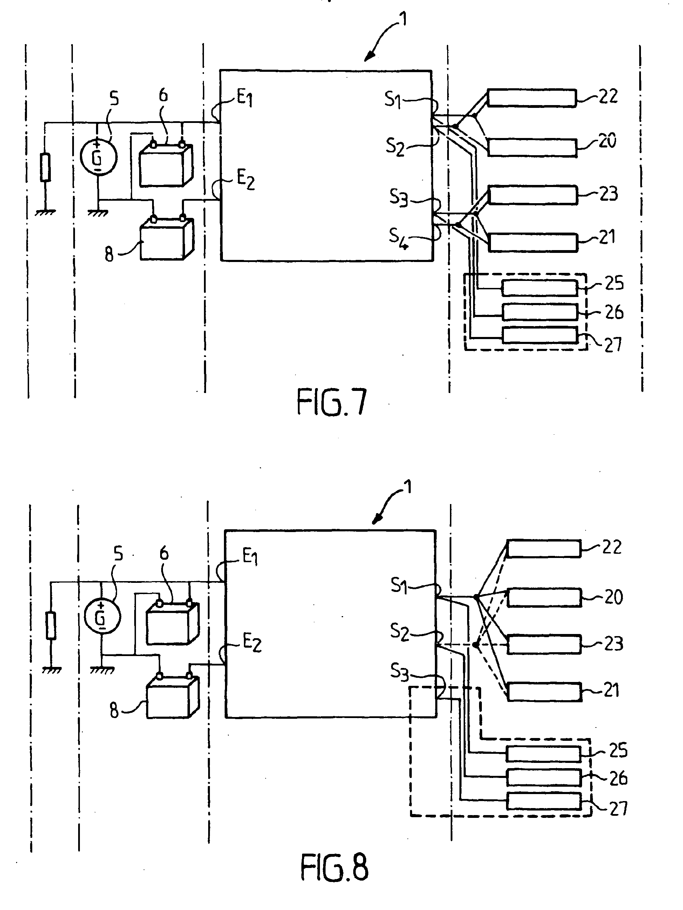

La figure 7 montre un troisième exemple d'architecture.

Dans cet exemple, le boîtier 1 comporte quatre sorties S₁, S₂, S₃ et S₄, c'est-à-dire que N=4. La sortie S₁ est connectée au frein avant gauche 22, au frein arrière droit 20 et à l'émulateur 25. La sortie S₂ est connectée au frein avant gauche 22, au frein arrière droit 20 et à l'émulateur 26.

La sortie S₃ est connectée au frein avant droit 23, au frein arrière gauche 21 et à l'émulateur 27. La sortie S₄ est connectée au frein avant droit 23 et au frein arrière gauche 21.

Dans cet exemple, les freins sont couplés par paire-diagonale et sont alimentés de manière redondante.

La figure 8 montre un quatrième exemple d'architecture.

Dans cet exemple, le boîtier 1 comporte trois sorties S₁, S₂ et S₃, c'est-à-dire que N=3. La sortie S₁ est connectée à chacun des freins 20 à 23 et à l'émulateur 25. La sortie S₂ est connectée à chacun des freins 20 à 23 et à l'émulateur 26. La sortie S₃ est connectée à l'émulateur 27.

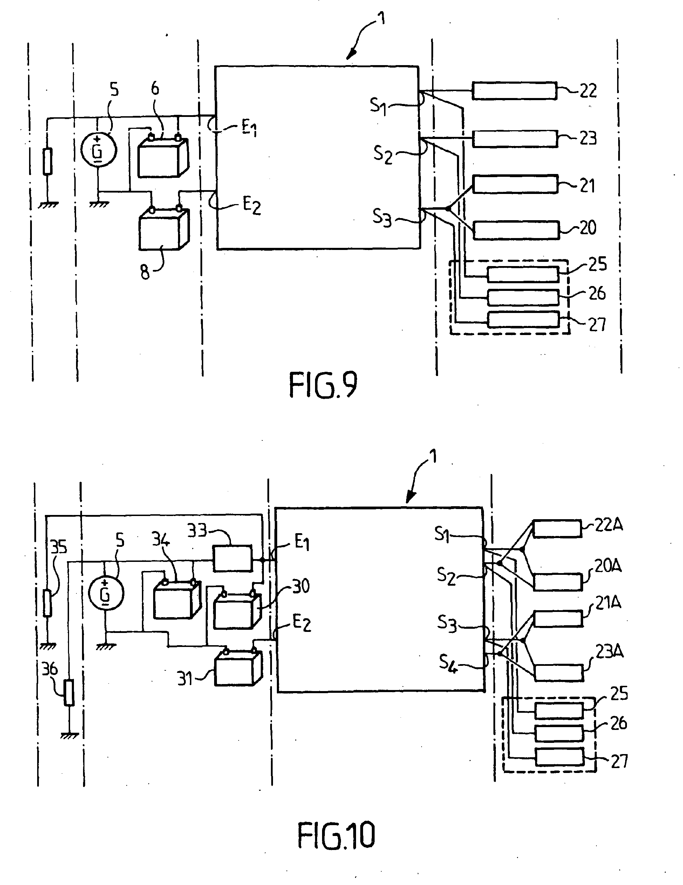

La figure 9 montre un cinquième exemple d'architecture.

Dans cet exemple, le boîtier 1 comporte trois sorties S₁, S₂ et S₃, c'est-à-dire que N=3. La sortie S₁ est connectée au frein avant gauche 22 et à l'émulateur 25. La sortie S₂ est connectée au frein avant droit 23 et à l'émulateur 26. La sortie S₃ est connectée au frein arrière gauche 21, au frein arrière droit 20 et à l'émulateur 27.

On notera que, dans cet exemple, les freins arrière sont couplés entre eux, les freins avant étant indépendants l'un de l'autre et des freins arrière.

Le fonctionnement général des premier à cinquième exemples d'architecture est similaire a ce qui a été décrit précédemment.

En mode normal, c'est-à-dire en l'absence de détection de défaillance, la batterie principale 6 est utilisée pour alimenter les freins électriques 20 à 23 et les émulateurs 25, 26 et 27.

Lorsque le moteur du véhicule est en fonctionnement, le générateur 5 charge la batterie principale 6 et la batterie secondaire 8 tant que la batterie secondaire 8 n'est pas complètement rechargée.

Dans le mode normal, tous les interrupteurs I sont fermés exceptés le troisième interrupteur I₃, c'est-à-dire l'interrupteur reliant la première ligne L_{E1} et la deuxième ligne L_{E2} (figure 1), et le deuxième interrupteur I₂, qui sont ouverts.

Lorsqu'une défaillance est détectée, le boîtier 1 assure une disponibilité maximale du système de freinage.

Par exemple, dans le cas d'un problème de connexion entre le boîtier 1 et la batterie principale 6, le module de commande commande l'ouverture du premier interrupteur I₁ et la fermeture du deuxième interrupteur I₂. En d'autres termes, le module de commande commande l'utilisation de la batterie secondaire 8 pour alimenter les freins 20 à 23.

En cas de court circuit sur une sortie S, le boîtier 1 isole la sortie concernée, pour circonscrire la défaillance et pour assurer la disponibilité de l'énergie. Les interrupteurs I des lignes d'alimentation de sortie Lₛ sont ainsi utilisés comme des « fusibles intelligents » et sont ouverts lorsqu'une défaillance est détectée sur leur sortie associée.

Les tableaux 1 à 5, qui sont respectivement associés aux exemples d'architecture 1 à 5, montrent les performances de l'architecture dans les modes dégradés.

Les différentes architectures résultent de différents compromis entre le nombre de sorties, donc le coût, et les performances de freinage dans les modes dégradés, c'est-à-dire en cas de défaillance. Toutes les architectures proposées sont tolérantes aux défaillances et remplissent les exigences de sécurité.

On notera toutefois que la quatrième architecture nécessite l'utilisation d'étriers de frein spécifiques pour éviter un risque de défaillance générale en cas de court circuit dans un étrier.

La figure 10 montre un sixième exemple d'architecture utilisant des étriers de frein 20A à 23A fonctionnant à une tension de 36V. Dans ce cas, les entrées E₁ et E₂ sont chacune connectée à une batterie 36V 30 et 31. Le générateur 14V 5 et une batterie 12V 34 sont connectés à l'entrée E₁ par le biais d'un convertisseur DC-DC 12V/42V 32. Des charges non critiques, c'est-à-dire des charges dont l'arrêt du fonctionnement n'entraîne pas de problème de sécurité pour le véhicule, peuvent être raccordées directement aux sources d'alimentation. Par exemple, une charge 35, fonctionnant à une tension de 42V, est connectée directement à la sortie du convertisseur 33. De manière similaire, une charge 36, fonctionnant à une tension de 12V, est connectée directement à la sortie de la batterie 34. Le fonctionnement de cet exemple d'architecture est similaire à ce qui a été décrit précédemment.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention.

**Tableau 1 - premier exemple d'architecture**

| Défaillance détectée | Mode dégradé/disponibilité | Sécurité |
|---|---|---|
| Court circuit sur un étrier | Freinage sur 3 roues | Pas de défaillance générale |
| Circuit ouvert sur un étrier | Freinage sur 3 roues | Pas du défaillance générale |
| Circuit ouvert sur une ligne d'alimentation de sortie | Freinage sur 3 roues | Pas de défaillance générale |

**Tableau 2 - deuxième exemple d'architecture**

| Défaillance détectée | Mode dégradé/disponibilité | Sécurité |
|---|---|---|
| Court circuit sur un étrier | Freinage sur une diagonale | Pas de défaillance générale |
| Circuit ouvert sur un étrier | Freinage sur 3 roues | Pas de défaillance générale |
| Circuit ouvert sur une ligne d'alimentation de sortie | Freinage sur une diagonale OU freinage normal | Pas de défaillance générale |

**Tableau 3 - troisième exemple d'architecture**

| Défaillance détectée | Mode dégradé/disponibilité | Sécurité |
|---|---|---|
| Court circuit sur un étrier | Freinage sur une diagonale OU freinage normal | Pas de défaillance générale |
| Circuit ouvert sur un étrier | Freinage normal | Pas de défaillance générale |
| Circuit ouvert sur une ligne d'alimentation de sortie | Freinage normal | Pas de défaillance générale |

**Tableau 4 - quatrième exemple d'architecture**

| Défaillance détectée | Mode dégradé/disponibilité | Sécurité |
|---|---|---|
| Court circuit sur un étrier | Pas de freinage OU freinage normal | Risque de défaillance générale (des étriers spécifiques doivent être utilisés) |
| Circuit ouvert sur un étrier | Freinage normal | Pas de défaillance générale |
| Circuit ouvert sur une ligne d'alimentation de sortie | Freinage normal | Pas de défaillance générale |

**Tableau 5 - cinquième exemple d'architecture**

| Défaillance détectée | Mode dégradé/disponibilité | Sécurité |
|---|---|---|
| Court circuit sur un étrier | Freinage avant OU freinage sur 3 roues (1 roue avant et 2 roues arrière) | Pas de défaillance générale |
| Circuit ouvert sur un étrier | Freinage sur 3 roues | Pas de défaillance générale |
| Circuit ouvert sur une ligne d'alimentation de sortie | Freinage avant OU freinage sur 3 roues (1 1 roue avant et 2 roues arrière) | Pas de défaillance générale |

## Revendications

1. Boîtier de distribution d'énergie (1) pour un système à commande électrique d'un véhicule, ledit boîtier de distribution d'énergie comportant :
- un ensemble d'entrées (E₁, E₂) destinées à être connectées à des sources d'alimentation (6, 8, 30, 31, 33, 34) en énergie électrique,
- un ensemble de sorties (S₁ à S_{N}) destinées à être connectées à des charges électriques (11, 12, 13, 14, 20, 21, 22, 23, 25, 26, 27, 20A, 21A, 22A, 23A) dudit système et
- des moyens de commutation (I₁ à I_{N}) disposés entre ledit ensemble d'entrées et ledit ensemble de sorties,
ledit boîtier de distribution d'énergie étant apte à communiquer avec un module de commande des moyens de commutation, ledit module de commande comportant des moyens de mesure pour effectuer des mesures d'au moins un paramètre électrique au niveau de chaque entrée dudit ensemble d'entrées et de chaque sortie dudit ensemble de sorties, ledit module de commande comportant des moyens de décision aptes à détecter, en fonction desdites mesures effectuées, une défaillance au niveau d'une entrée dudit ensemble d'entrées ou d'une sortie dudit ensemble de sorties, lesdits moyens de décision étant aptes, lorsqu'une dite défaillance a été détectée, à commander lesdits moyens de commutation dans un mode dégradé permettant d'isoler l'entrée ou la sortie comportant ladite défaillance,
**caractérisé en ce que** ledit boîtier de distribution d'énergie comporte une ligne de connexion (L_{I}) connectée respectivement par une ligne d'alimentation d'entrée (L_{E}) à chaque entrée dudit ensemble d'entrées, ladite ligne de connexion (L_{I}) étant connectée respectivement par une ligne d'alimentation de sortie (L_{S}) à chaque sortie dudit ensemble de sorties, un moyen de commutation étant disposé respectivement sur chaque ligne d'alimentation d'entrée, un moyen de commutation étant disposé respectivement sur chaque ligne d'alimentation de sortie.

2. Boîtier de distribution d'énergie selon la revendication 1, **caractérisé en ce que** ledit ensemble d'entrées comporte une première entrée (E₁) et une deuxième entrée (E₂), une première ligne d'alimentation d'entrée (L_{E1}) s'étendant entre ladite première entrée et ladite ligne de connexion (L₁), une deuxième ligne d'alimentation d'entrée (L_{E2}) s'étendant entre ladite deuxième entrée et ladite ligne de connexion (L₁), un moyen de commutation (I₃) assurant le couplage sélectif de ladite première ligne d'alimentation d'entrée et de ladite deuxième ligne d'alimentation d'entrée.

3. Boîtier de distribution d'énergie électrique selon les revendications 1 ou 2, **caractérisé en ce qu'**au moins l'un desdits moyens de commutation (I₁ à I_{N}) est réalisé à l'aide d'un transistor.

4. Boîtier de distribution d'énergie électrique selon la revendication 3, **caractérisé en ce que** ledit transistor est un transistor à pompe de charge intégrée ou un transistor à pompe de charge externe et redondée.

5. Boîtier de distribution d'énergie électrique selon la revendication 3 ou 4, **caractérisé que** ledit transistor est apte à être utilisé sur sa diode intrinsèque en cas de défaillance de la pompe de charge alimentant ledit transistor.

6. Boîtier de distribution d'énergie électrique selon les revendications 1 ou 2, **caractérisé en ce qu'**au moins l'un desdits moyens de commutation (I₁ à I_{N}) est réalisé à l'aide d'un relais.

7. Boîtier de distribution d'énergie électrique selon l'une quelconque des revendications 1 à 6, **caractérisé en ce** ledit module de commande est silencieux en cas de défaillance, au moins certains desdits moyens de commutation (I₁ à I_{N}) étant fermés par défaut de façon à alimenter chaque sortie dudit ensemble de sorties par au moins une entrée dudit ensemble d'entrées.

8. Architecture de distribution d'énergie comportant un boîtier de distribution d'énergie (1) selon l'une quelconque des revendications 1 à 7, **caractérisé en ce que** ledit boîtier de distribution d'énergie alimente en énergie un système de freinage électromécanique dudit véhicule, une première entrée (E₁) dudit ensemble d'entrées étant connectée à une source principale d'alimentation en énergie électrique (6, 30), et une deuxième entrée (E₂) dudit ensemble d'entrées étant connectée à une source secondaire d'alimentation en énergie électrique (8,31).

9. Architecture de distribution d'énergie selon la revendication 8, **caractérisé en ce que** ledit système de freinage électromécanique comporte trois émulateurs de toucher de pédale (25, 26, 27) connectés respectivement à trois sorties dudit ensemble de sorties (S₁ à S_{N}) dudit boîtier de distribution d'énergie de manière que, en cas de défaillance, au moins deux desdits émulateurs de toucher de pédale soient aptes à être alimentés par ledit boîtier de distribution d'énergie.

10. Architecture de distribution d'énergie selon la revendication 8, **caractérisé en ce que** ledit système de freinage électromécanique comporte deux émulateurs de toucher de pédale (25, 26) connectés respectivement à deux sorties dudit ensemble de sorties (S₁ à S_{N}) dudit boîtier de distribution d'énergie de manière que, en cas de défaillance, au moins l'un desdits émulateurs de toucher de pédale soit apte à être alimenté par ledit boîtier de distribution d'énergie.

11. Architecture de distribution d'énergie selon la revendication 8, **caractérisé en ce que** ledit ensemble de sorties comporte une première sortie (S₁) connectée à un premier frein électrique (22) dudit système de freinage électromécanique et à un premier émulateur de toucher de pédale (25) dudit système de freinage électromécanique, ledit ensemble de sorties comportant une deuxième sortie (S₂) connectée à un deuxième frein électrique (20) dudit système de freinage électromécanique et à un deuxième émulateur de toucher de pédale (26) dudit système de freinage électromécanique, ledit ensemble de sorties comportant une troisième sortie (S₃) connectée à un troisième frein électrique (23) dudit système de freinage électromécanique et à un troisième émulateur de toucher de pédale (27) dudit système de freinage électromécanique, ledit ensemble de sorties comportant une quatrième sortie (S₄) connectée à un quatrième frein électrique (21) dudit système de freinage électromécanique.

12. Architecture de distribution d'énergie selon la revendication 8, **caractérisé en ce que** ledit ensemble de sorties comporte une première sortie (S₁) connectée à un premier frein électrique (22) dudit système de freinage électromécanique, à un deuxième frein électrique (20) dudit système de freinage électromécanique, ledit deuxième frein électrique (20) étant disposé en diagonale par rapport audit premier frein électrique, et à un premier émulateur de toucher de pédale (26) dudit système de freinage électromécanique, ledit ensemble de sorties comportant une deuxième sortie (S₂) connectée à un troisième frein électrique (23) dudit système de freinage électromécanique, à un quatrième frein électrique (21) dudit système de freinage électromécanique, ledit quatrième frein électrique (21) étant disposé en diagonale par rapport audit troisième frein électrique (23), et à un deuxième émulateur de toucher de pédale (27) dudit système de freinage électromécanique, ledit ensemble de sorties comportant une troisième sortie (S₃) connectée à un troisième émulateur de toucher de pédale (25) dudit système de freinage électromécanique.

13. Architecture de distribution d'énergie selon la revendication 8, **caractérisé en ce** ledit ensemble de sorties comporte une première sortie (S₁) connectée à un premier frein électrique (22) dudit système de freinage électromécanique, à un deuxième frein électrique (20) dudit système de freinage électromécanique, ledit deuxième frein électrique (20) étant disposé en diagonale par rapport audit premier frein électrique, et à un premier émulateur de toucher de pédale (25) dudit système de freinage électromécanique, ledit ensemble de sorties comportant une deuxième sortie (S₂) connectée audit premier frein électrique (22), audit deuxième frein électrique (20) et à un deuxième émulateur de toucher de pédale (26) dudit système de freinage électromécanique, ledit ensemble de sorties comportant une troisième sortie (S₃) connectée à un troisième frein électrique (23) dudit système de freinage électromécanique, à un quatrième frein électrique (21) dudit système de freinage électromécanique, ledit quatrième frein électrique (21) étant disposé en diagonale par rapport audit troisième frein électrique (23), et à un troisième émulateur de toucher de pédale (27) dudit système de freinage électromécanique, ledit ensemble de sorties comportant une quatrième sortie (S₄) connectée audit troisième frein électrique (23) et audit quatrième frein électrique (24).

14. Architecture de distribution d'énergie selon la revendication 8, **caractérisé en ce que** ledit ensemble de sorties comporte une première sortie (S₁) connectée à quatre freins électriques (20, 21, 22, 23) dudit système de freinage électromécanique et à un premier émulateur de toucher de pédale (25) dudit système de freinage électromécanique, ledit ensemble de sorties comportant une deuxième sortie (S₂) connectée auxdits quatre freins électriques et à un deuxième émulateur de toucher de pédale (26) dudit système de freinage électromécanique, ledit ensemble de sorties comportant une troisième sortie (S₃) connectée à un troisième émulateur de toucher de pédale (27) dudit système de freinage électromécanique.

15. Architecture de distribution d'énergie selon la revendication 8, **caractérisé en ce que** ledit ensemble de sorties comporte une première sortie (S₁) connectée à un premier frein électrique avant (22) dudit système de freinage électromécanique et à un premier émulateur de toucher de pédale (25) dudit système de freinage électromécanique, ledit ensemble de sorties comportant une deuxième sortie (S₂) connectée à un deuxième frein électrique avant (23) dudit système de freinage électromécanique et à un deuxième émulateur de toucher de pédale (26) dudit système de freinage électromécanique, ledit ensemble de sorties comportant une troisième sortie (S₃) connectée à deux freins électriques arrière (21, 20) dudit système de freinage électromécanique et à un troisième émulateur de toucher de pédale (27) dudit système de freinage électromécanique.

## Claims

1. Energy distribution box (1) for an electrically controlled system of a vehicle, said energy distribution box including:
- a set of inputs (E₁, E₂) intended to be connected to electrical energy supply sources (6, 8, 30, 31, 33, 34)
- a set of outputs (S₁ to S_{N}) intended to be connected to electrical loads (11, 12, 13, 14, 20, 21, 22, 23, 25, 26, 27, 20A, 21A, 22A, 23A) of said system and
- switching means (I₁ to I_{N}) arranged between said set of inputs and said set of outputs said energy distribution box being capable of communicating with a switching means control module, said control module including measurement means for performing measurements of at least one electrical parameter at each input of said set of inputs and each output of said set of outputs, said control module including decision means capable of detecting, as a function of said measurements performed, a malfunction at an input of said set of inputs or an output of said set of outputs, said decision means being capable, when a said malfunction has been detected, of controlling said switching means in a degraded mode providing for isolation of the input or output having said malfunction, **characterised in that** said energy distribution box includes a connection line (L_{I}) connected respectively by an input supply line (L_{E}) to each input of said set of inputs, said connection line (L_{I}) being connected respectively by an output supply line (L_{S}) to each output of said set of outputs, a switching means being arranged respectively on each input supply line, a switching means being arranged respectively on each output supply line.

2. Energy distribution box according to claim 1, **characterised in that** said set of inputs includes a first input (E₁) and a second input (E₂), a first input supply line (L_{E1}) extending between said first input and said connection line (L_{I}), a second input supply line (L_{E2}) extending between said second input and said connection line (L_{I}), a switching means (I₃) providing selective coupling of said first input supply line and said second input supply line.

3. Electrical energy distribution box according to claims 1 or 2, **characterised in that** at least one of said switching means (I₁ to I_{N}) is formed using a transistor.

4. Electrical energy distribution box according to claim 3, **characterised in that** said transistor is a transistor with an integrated charge pump or a transistor with an external and redundant charge pump.

5. Electrical energy distribution box according to claim 3 or 4, **characterised in that** said transistor is capable of being used on its intrinsic diode in the event of malfunction of the charge pump supplying said transistor.

6. Electrical energy distribution box according to claims 1 or 2, **characterised in that** at least one of said switching means (I₁ to I_{N}) is formed by means of a relay.

7. Electrical energy distribution box according to any one of claims 1 to 6, **characterised in that** said control module is silent in the event of malfunction, at least some of said switching means (I₁ to I_{N}) being closed by default so as to supply each output of said set of outputs through at least one input of said set of inputs.

8. Energy distribution architecture including an energy distribution box (1) according to any one of claims 1 to 7, **characterised in that** the said energy distribution box supplies energy to an electromechanical braking system of said vehicle, a first input (E₁) of said set of inputs being connected to a main electrical energy supply source (6, 30), and a second input (E₂) of said set of inputs being connected to a secondary electrical energy supply source (8, 31).

9. Energy distribution architecture according to claim 8, **characterised in that** said electromechanical braking system includes three pedal feel emulators (25, 26, 27) connected respectively to three outputs of said set of outputs (S₁ to S_{N}) of said energy distribution box so that, in the event of malfunction, at least two of said pedal feel emulators are capable of being supplied by said energy distribution box.

10. Energy distribution architecture according to claim 8, **characterised in that** said electromechanical braking system includes two pedal feel emulators (25, 26) connected respectively to two outputs of said set of outputs (S₁ to S_{N}) of said energy distribution box so that, in the event of malfunction, at least one of said pedal feel emulators is capable of being supplied by said energy distribution box.

11. Energy distribution architecture according to claim 8, **characterised in that** said set of outputs includes a first output (S₁) connected to a first electric brake (22) of said electromechanical braking system and to a first pedal feel emulator (25) of said electromechanical braking system, said set of outputs including a second output (S₂) connected to a second electric brake (20) of said electromechanical braking system and to a second pedal feel emulator (26) of said electromechanical braking system, said set of outputs including a third output (S₃) connected to a third electric brake (23) of said electromechanical braking system and to a third pedal feel emulator (27) of said electromechanical braking system, said set of outputs including a fourth output (S₄) connected to a fourth electric brake (21) of said electromechanical braking system.

12. Energy distribution architecture according to claim 8, **characterised in that** said set of outputs includes a first output (S₁) connected to a first electric brake (22) of said electromechanical braking system, to a second electric brake (20) of said electromechanical braking system, said second electric brake (20) being arranged diagonally with respect to said first electric brake, and to a first pedal feel emulator (26) of said electromechanical braking system, said set of outputs including a second output (S₂) connected to a third electric brake (23) of said electromechanical braking system, to a fourth electric brake (21) of said electromechanical braking system, said fourth electric brake (21) being arranged diagonally with respect to said third electric brake (23), and to a second pedal feel emulator (27) of said electromechanical braking system, said set of outputs including a third output (S₃) connected to a third pedal feel emulator (25) of said electromechanical braking system.

13. Energy distribution architecture according to claim 8, **characterised in that** said set of outputs includes a first output (S₁) connected to a first electric brake (22) of said electromechanical braking system, to a second electric brake (20) of said electromechanical braking system, said second electric brake (20) being arranged diagonally with respect to said first electric brake, and to a first pedal feel emulator (25) of said electromechanical braking system, said set of outputs including a second output (S₂) connected to said first electric brake (22), to said second electric brake (20) and to a second pedal feel emulator (26) of said electromechanical braking system, said set of outputs including a third output (S₃) connected to a third electric brake (23) of said electromechanical braking system, to a fourth electric brake (21) of said electromechanical braking system, said fourth electric brake (21) being arranged diagonally with respect to said third electric brake (23), and to a third pedal feel emulator (27) of said electromechanical braking system, said set of outputs including a fourth output (S₄) connected to said third electric brake (23) and to said fourth electric brake (24).

14. Energy distribution architecture according to claim 8, **characterised in that** said set of outputs includes a first output (S₁) connected to four electric brakes (20, 21, 22, 23) of said electromechanical braking system and to a first pedal feel emulator (25) of said electromechanical braking system, said set of outputs including a second output (S₂) connected to said four electric brakes and to a second pedal feel emulator (26) of said electromechanical braking system, said set of outputs including a third output (S₃) connected to a third pedal feel emulator (27) of said electromechanical braking system.

15. Energy distribution architecture according to claim 8, **characterised in that** said set of outputs includes a first output (S₁) connected to a first front electric brake (22) of said electromechanical braking system and to a first pedal feel emulator (25) of said electromechanical braking system, said set of outputs including a second output (S₂) connected to a second front electric brake (23) of said electromechanical braking system and to a second pedal feel emulator (26) of said electromechanical braking system, said set of outputs including a third output (S₃) connected to two rear electric brakes (21, 20) of said electromechanical braking system and to a third pedal feel emulator (27) of said electromechanical braking system.

## Patentansprüche

1. Energieverteilungsgehäuse (1) für ein System für eine elektrische Steuerung eines Fahrzeugs, wobei das Energieverteilungsgehäuse aufweist:
- eine Menge an Eingängen (E₁, E₂), die bestimmt sind, mit elektrischen Energieversorgungsquellen (6, 8, 30, 31, 33, 34) verbunden zu werden,
- eine Menge an Ausgängen (S₁ bis S_{N}), die bestimmt sind, mit elektrischen Lasten (11, 12, 13, 14, 20, 21, 22, 23, 25, 26, 27, 20A, 21A, 22A, 23A) des Systems verbunden zu werden, und
- Schaltmittel (I₁ bis I_{N}), die zwischen der Menge an Eingängen und der Menge an Ausgängen angeordnet sind,
wobei das Energieverteilungsgehäuse geeignet ist, mit einem Steuermodul der Schaltmittel zu kommunizieren, wobei das Steuermodul Messmittel aufweist, um Messungen von zumindest einem elektrischen Parameter in Bezug auf jeden Eingang der Menge an Eingängen und jeden Ausgang der Menge an Ausgängen durchzuführen, wobei das Steuermodul Entscheidungsmittel aufweist, die geeignet sind, entsprechend den durchgeführten Messungen, einen Fehler in Bezug auf einen Eingang der Menge an Eingängen oder einen Ausgang der Menge an Ausgängen zu detektieren, wobei die Entscheidungsmittel geeignet sind, wenn ein besagter Fehler detektiert wurde, die Schaltmittel in einem Notmodus zu steuern, um zu erlauben, den Eingang oder den Ausgang, der den Fehler aufweist, zu isolieren,
**dadurch gekennzeichnet, dass** das Energieverteilungsgehäuse eine Verbindungsleitung (L₁) aufweist, die jeweils durch eine Eingangsversorgungsleitung (L_{E}) mit jedem Eingang der Menge an Eingängen verbunden ist, wobei die Verbindungsleitung (L₁) durch eine Ausgangsversorgungsleitung (L_{S}) mit jedem Ausgang der Menge an Ausgängen verbunden ist, wobei ein Schaltmittel jeweils auf jeder Eingangsversorgungsleitung angeordnet ist, wobei ein Schaltmittel jeweils auf jeder Ausgangsversorgungsleitung angeordnet ist.

2. Energieverteilungsgehäuse gemäß Anspruch 1, **dadurch gekennzeichnet, dass** die Menge an Eingängen einen ersten Eingang (E₁) und einen zweiten Eingang (E₂) aufweist, wobei eine erste Eingangsversorgungsleitung (L_{E1}) sich zwischen dem ersten Eingang und der Verbindungsleitung (L₁) erstreckt, wobei eine zweite Eingangsversorgungsleitung (L_{E2}) sich zwischen dem zweiten Eingang und der Verbindungsleitung (L₁) erstreckt, wobei ein Schaltmittel (I₃) die selektive Kopplung der ersten Eingangsversorgungsleitung und der zweiten Versorgungsleitung sicherstellt.

3. Elektrisches Energieverteilungsgehäuse gemäß Anspruch 1 oder 2, **dadurch gekennzeichnet, dass** zumindest eines der Schaltmittel (I₁ bis IN) mit Hilfe eines Transistors realisiert ist.

4. Elektrisches Energieverteilungsgehäuse gemäß Anspruch 3, **dadurch gekennzeichnet, dass** der Transistor ein Transistor einer integrierten Ladungspumpe oder ein Transistor einer externen und redundanten Ladungspumpe.

5. Elektrisches Energieverteilungsgehäuse gemäß Anspruch 3 oder 4, **dadurch gekennzeichnet, dass** der Transistor geeignet ist, im Fall eines Fehlers der Ladungspumpe, die den Transistor versorgt, auf seiner intrinsischen Diode verwendet zu werden.

6. Elektrisches Energieverteilungsgehäuse gemäß Anspruch 1 oder 2, **dadurch gekennzeichnet, dass** zumindest eines der Schaltmittel (I₁ bis IN) mit Hilfe eines Relais realisiert ist.

7. Elektrisches Energieverteilungsgehäuse gemäß irgendeinem der Ansprüche 1 bis 6, **dadurch gekennzeichnet, dass** das Steuermodul im Fall eines Fehlers still ist, wobei zumindest gewisse der Schaltmittel (I₁ bis I_{N}) standardmäßig geschlossen sind, um jeden Ausgang der Menge von Ausgängen durch zumindest einen Eingang der Menge an Eingängen zu versorgen.

8. Energieverteilungsarchitektur, die ein Energieverteilungsgehäuse (1) gemäß irgendeinem der Ansprüche 1 bis 7 aufweist, **dadurch gekennzeichnet, dass** das Energieverteilungsgehäuse ein elektromechanisches Bremssystem des Fahrzeugs mit Energie versorgt, wobei ein erster Eingang (E₁) der Menge an Eingängen mit einer Hauptquelle der elektrischen Energieversorgung (6, 30) verbunden ist, und ein zweiter Eingang (E₂) der Menge an Eingängen mit einer sekundären Quelle der elektrischen Energieversorgung (8, 31) verbunden ist.

9. Energieverteilungsarchitektur gemäß Anspruch 8, **dadurch gekennzeichnet, dass** das elektromechanische Bremssystem drei Pedalberührungsemulatoren (25, 26, 27) aufweist, die jeweils mit drei Ausgängen der Menge an Ausgängen (S₁ bis S_{N}) des Energieverteilungsgehäuses so verbunden sind, dass, im Fall eines Fehlers, zumindest zwei der Pedalberührungsemulatoren geeignet sind, durch das Energieverteilungsgehäuse versorgt zu werden.

10. Energieverteilungsarchitektur gemäß Anspruch 8, **dadurch gekennzeichnet, dass** das elektromechanische Bremssystem zwei Pedalberührungsemulatoren (25, 26) aufweist, die jeweils mit zwei Ausgängen der Menge an Ausgängen (S₁ bis S_{N}) des Energieverteilungsgehäuses so verbunden sind, dass, im Fall eines Fehlers, zumindest einer der Pedalberührungsemulatoren geeignet ist, durch das Energieverteilungsgehäuse versorgt zu werden.

11. Energieverteilungsarchitektur gemäß Anspruch 8, **dadurch gekennzeichnet, dass** die Menge an Ausgängen einen ersten Ausgang (S₁) aufweist, der mit einer ersten elektrischen Bremse (22) des elektromechanischen Bremssystems und einem ersten Pedalberührungsemulator (25) des elektromechanischen Bremssystems verbunden ist, wobei die Menge an Ausgängen einen zweiten Ausgang (S₂) aufweist, der mit einer zweiten elektrischen Bremse (20) des elektromechanischen Bremssystems und einem zweiten Pedalberührungsemulator (26) des elektromechanischen Bremssystems verbunden ist, wobei die Menge an Ausgängen einen dritten Ausgang (S₃) aufweist, der mit einer dritten elektrischen Bremse (23) des elektromechanischen Bremssystems und einem dritten Pedalberührungsemulator (27) des elektromechanischen Bremssystems verbunden ist, wobei die Menge an Ausgängen einen vierten Ausgang (S₄) aufweist, der mit einer vierten elektrischen Bremse (21) des elektromechanischen Bremssystems verbunden ist.

12. Energieverteilungsarchitektur gemäß Anspruch 8, **dadurch gekennzeichnet, dass** die Menge an Ausgängen einen ersten Ausgang (S₁) aufweist, der mit einer ersten elektrischen Bremse (22) des elektromechanischen Bremssystems, einer zweiten elektrischen Bremse (20) des elektromechanischen Bremssystems, wobei die zweite elektrische Bremse (20) diagonal gegenüber der ersten elektrischen Bremse angeordnet ist, und einem ersten Pedalberührungsemulator (26) des elektromechanischen Bremssystems verbunden ist, wobei die Menge an Ausgängen einen zweiten Ausgang (S₂) aufweist, der mit einer dritten elektrischen Bremse (23) des elektromechanischen Bremssystems, einer vierten elektrischen Bremse (21) des elektromechanischen Bremssystems, wobei die vierte elektrische Bremse (21) diagonal gegenüber der dritten elektrischen Bremse (23) angeordnet ist, und einem zweiten Pedalberührungsemulator (27) des elektromechanischen Bremssystems verbunden ist, wobei die Menge an Ausgängen einen dritten Ausgang (S₃) aufweist, der mit einem dritten Pedalberührungsemulator (25) des elektromechanischen Bremssystems verbunden ist.

13. Energieverteilungsarchitektur gemäß Anspruch 8, **dadurch gekennzeichnet, dass** die Menge an Ausgängen einen ersten Ausgang (S₁) aufweist, der mit einer ersten elektrischen Bremse (22) des elektromechanischen Bremssystems, einer zweiten elektrischen Bremse (20) des elektromechanischen Bremssystems, wobei die zweite elektrische Bremse (20) diagonal gegenüber der ersten elektrischen Bremse angeordnet ist, und einem ersten Pedalberührungsemulator (25) des elektromechanischen Bremssystems verbunden ist, wobei die Menge an Ausgängen einen zweiten Ausgang (S₂) aufweist, der mit der ersten elektrischen Bremse (22), der zweiten elektrischen Bremse (20) und einem zweiten Pedalberührungsemulator (26) des elektromechanischen Bremssystems verbunden ist, wobei die Menge an Ausgängen einen dritten Ausgang (S₃) aufweist, der mit einer dritten elektrischen Bremse (23) des elektromechanischen Bremssystems, einer vierten elektrischen Bremse (21) des elektromechanischen Bremssystems, wobei die vierte elektrische Bremse (21) diagonal gegenüber der dritten elektrischen Bremse (23) angeordnet ist, und einem dritten Pedalberührungsemulator (27) des elektromechanischen Bremssystems verbunden ist, wobei die Menge an Ausgängen einen vierten Ausgang (S₄) aufweist, der mit der dritten elektrischen Bremse (23) und der vierten elektrischen Bremse (24) verbunden ist.

14. Energieverteilungsarchitektur gemäß Anspruch 8, **dadurch gekennzeichnet, dass** die Menge an Ausgängen einen ersten Ausgang (S₁) aufweist, der mit vier elektrischen Bremsen (20, 21, 22, 23) des elektromechanischen Bremssystems und einem ersten Pedalberührungsemulator (25) des elektromechanischen Bremssystems verbunden ist, wobei die Menge an Ausgängen einen zweiten Ausgang (S₂) aufweist, der mit den vier elektrischen Bremsen und einem zweiten Pedalberührungsemulator (26) des elektromechanischen Bremssystems verbunden ist, wobei die Menge an Ausgängen einen dritten Ausgang (S₃) aufweist, der mit einem dritten Pedalberührungsemulator (27) des elektromechanischen Bremssystems verbunden ist.

15. Energieverteilungsarchitektur gemäß Anspruch 8, **dadurch gekennzeichnet, dass** die Menge an Ausgängen einen ersten Ausgang (S₁) aufweist, der mit einer ersten elektrischen vorderen Bremse (22) des elektromechanischen Bremssystems und einem ersten Pedalberührungsemulator (25) des elektromechanischen Bremssystems verbunden ist, wobei die Menge an Ausgängen einen zweiten Ausgang (S₂) aufweist, der einer zweiten elektrischen vorderen Bremse (23) des elektromechanischen Bremssystems und einem zweiten Pedalberührungsemulator (26) des elektromechanischen Bremssystems verbunden ist, wobei die Menge an Ausgängen einen dritten Ausgang (S₃) aufweist, der mit zwei elektrischen hinteren Bremsen (21, 20) des elektromechanischen Bremssystems und einem dritten Pedalberührungsemulator (27) des elektromechanischen Bremssystems verbunden ist.
